(19) Europäisches Patentamt
European Patent Office
Office européen des brevets

(11) Publication number: **0 271 538 B1**

# (12) EUROPEAN PATENT SPECIFICATION

(45) Date of publication of patent specification :
02.10.91 Bulletin 91/40

(51) Int. Cl.⁵ : **B60P 3/42,** B60P 3/36, A61G 3/00

(21) Application number : 87903891.7

(22) Date of filing : 12.06.87

(86) International application number :
**PCT/GB87/00407**

(87) International publication number :
**WO 87/07566 17.12.87 Gazette 87/28**

## (54) VEHICLE BODY UNIT.

(30) Priority : 14.06.86 GB 8614528

(43) Date of publication of application :
22.06.88 Bulletin 88/25

(45) Publication of the grant of the patent :
02.10.91 Bulletin 91/40

(84) Designated Contracting States :
AT BE CH DE FR GB IT LI LU NL SE

(56) References cited :
EP-A- 0 057 909
DE-A- 2 215 973
FR-A- 1 220 978
FR-A- 1 305 738
FR-A- 2 128 994

(73) Proprietor : **POD LIMITED**
**Ashlyns Hall**
**Berkhamsted, Hertfordshire HP4 2ST (GB)**

(72) Inventor : **DYMOND, Roger, Keith**
**Hillside Cottage**
**Akeley Buckinghamshire MK18 5HR (GB)**

(74) Representative : **Griffin, Kenneth David et al**
**Saunders & Dolleymore 9, Rickmansworth**
**Road**
**Watford Hertfordshire WD1 7HE (GB)**

Jouve, 18, rue Saint-Denis, 75001 PARIS

## Description

The invention relates to a vehicle body unit designed as an independent self-contained unit which can be mounted behind the cabin of a vehicle having an independent driver's cabin e.g. a pick-up, rest either on the platform of that vehicle or chassis (or frame) of that vehicle and be fixed to the vehicle by known means, such as over-centre fasteners, rigging screw assembly or straps and buckles as specified in the preamble of claim 1 and as disclosed for example in EP-A-0 057 909. A body unit according to the invention can also be used elsewhere, e.g. on a boat.

Known vehicle body units have various disadvantages known to persons skilled in the art, one of them being that they are either insufficiently specialised and can be converted for a specific purpose only with difficulties and considerable expense, if at all, or they are excessively specialised and cannot be converted for other uses.

To this end, a vehicle body unit in accordance with the present invention is characterised by the features specified in the characterising portion of claim 1.

The invention will now be described, by way of example, with reference to the accompanying diagrammatic drawings, in which:

Figure 1 shows the basic form of a right-hand side of a unit;

Figure 2 shows the right-hand side of Figure 1 with a worktop module added thereto;

Figure 3 shows the basic form of a left-hand side of a unit and a removable platten;

Figure 4 shows the left-hand side of Figure 3 with the platten in position;

Figure 5 shows the left-hand side of Figure 4 with a worktop module situated on top of the stretcher platten;

Figure 6 is a perspective view of a unit adapted as a dental suite;

Figure 7 shows a unit adapted as an ambulance;

Figure 8 shows a unit adapted as a clinic; and

Figure 9 shows a unit adapted as an X-ray unit.

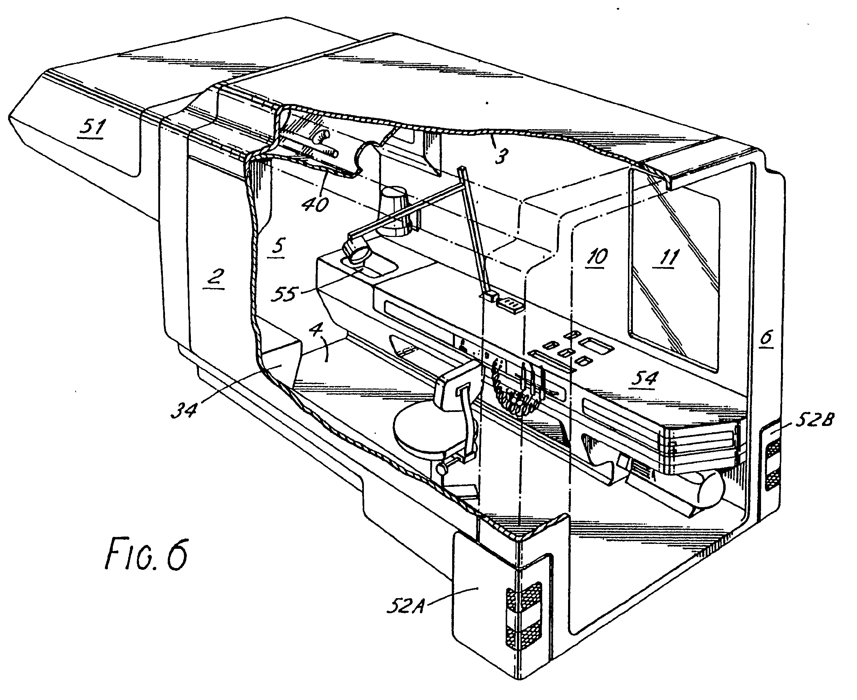

The overall shape of a unit according to the invention is best apparent from Figures 6 to 9. As can be seen from those Figures every unit comprises a right-hand side, a left-hand side, a top including a ceiling 3, a bottom including a floor 4, a front wall 5 and a rear wall 6.

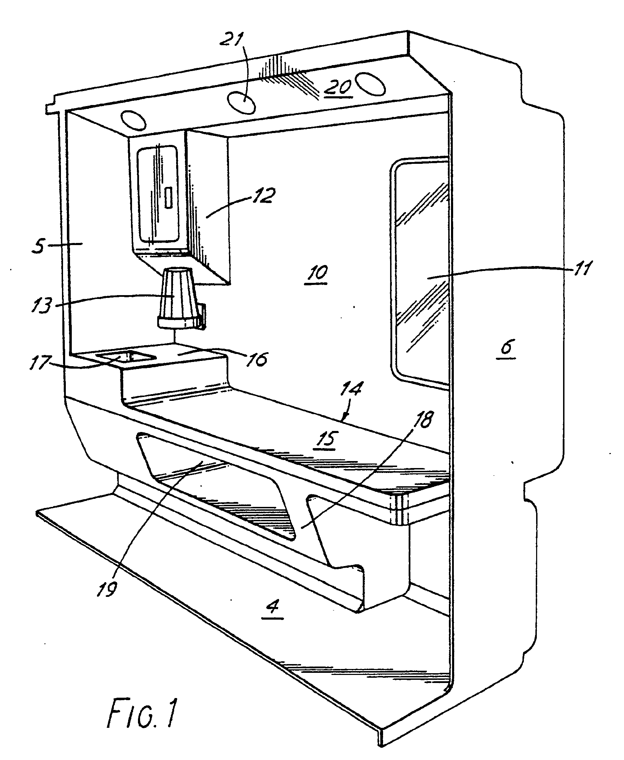

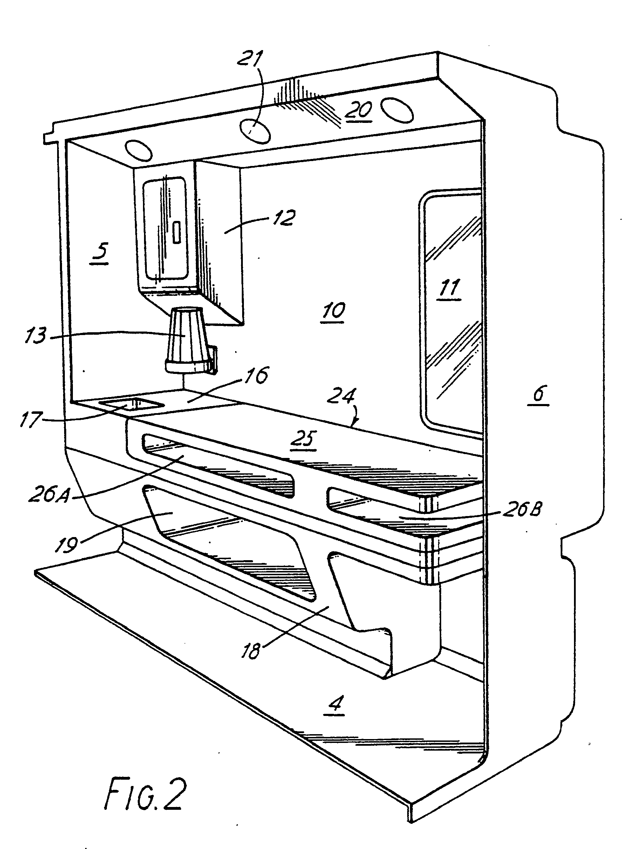

As is shown in Figure 1, the right-hand side comprises a right-hand side wall 10 including a window 11 and carrying a cabinet 12 which is moulded integrally with the wall 10 and a paper towel dispenser 13 attached to the wall 10. Moulded integrally with the walls 5 and 10 and the bottom is a fixed platten 14 which comprises a planar main top 15 which extends up to the rear wall 6 and a raised top 16 which extends up to the front wall 5, the top 16 being preferably provided with an upwardly open cavity 17. The tops 15 and 16 rest on a downwardly receding support 18 which is spaced from the rear wall 6 and provided with a laterally open cavity 19. Along the upper part of the wall 10 and the adjacent part of the ceiling 3 (Figures 1 and 2) extends a panel 20, a part of which is oblique to the ceiling 3 and wall 10 and which is integral with both, whereby a hollow (not shown) is defined between the panel 20 and the associated portions of the ceiling 3 and wall 10 behind it. The panel 20 is provided with openings 21 in which may be mounted e.g. lamps or parts of a ventilating or air conditioning equipment.

Figure 2 shows the right-hand side illustrated in Figure 1 provided with a worktop module 24 resting on the main top 15 (Figure 1) and extending between the raised top 16 and the rear wall 6. The module 24 is provided with a top 25 and laterally open cavities 26A and 26B.

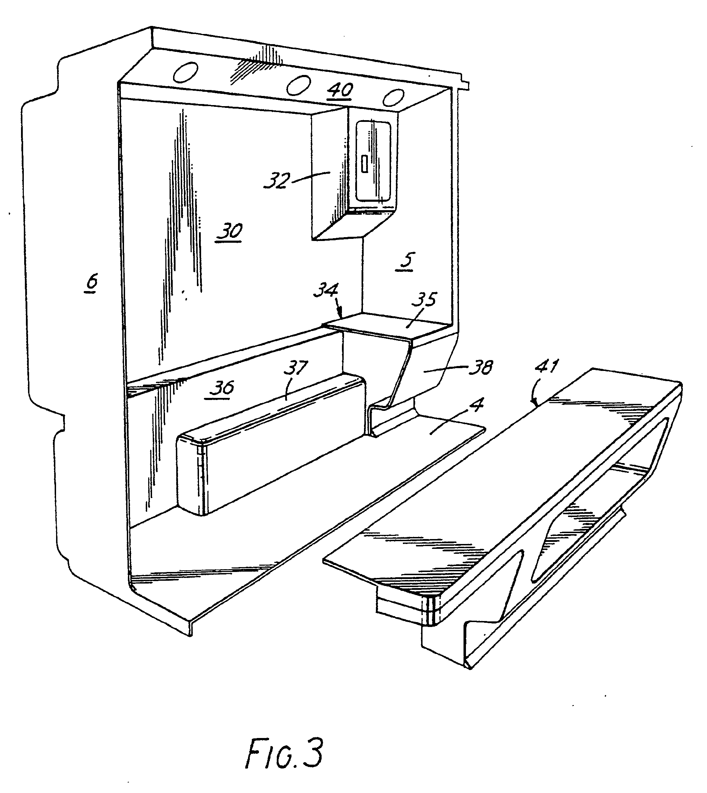

Figure 3 shows the left-hand side of the unit which is in many respects similar to the right-hand side described in connection with Figure 1. It comprises a left-hand side wall 30 which may be provided with a window (not shown) or an area of reduced thickness (not shown) which can be easily cut out when a window is desired to be fitted at a later stage. The wall 30 carries a cabinet 32 integrally moulded therewith. Moulded integrally with the walls 5 and 30 and the bottom is a short fixed platten 34 having a planar top 35 resting on a downwardly receding support 38. Along the upper part of the wall 30 and the adjacent part of the ceiling 3 extends a panel 40 arranged in the same way as the panel 20 described earlier and provided with openings (see Figures 3 to 5) having a similar purpose as the openings 21. Along the wall 30 is provided a long support step 36 which extends between the fixed platten 34 and the rear wall 6 and is slightly lower than the fixed platten 34. Along the long step 36 extends a lower short support step 37 which extends from the fixed platten 34 in the direction to the rear wall 6 but ends a certain distance from the wall 6.

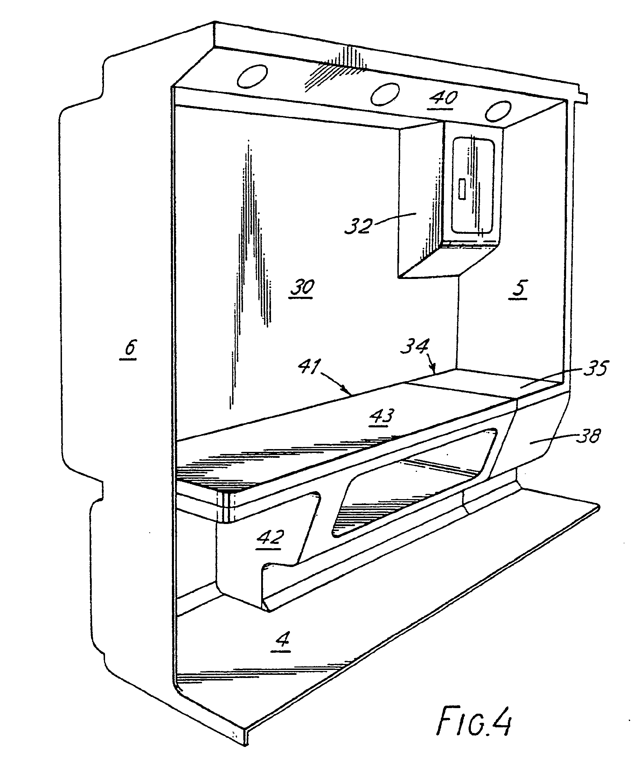

A removable platten 41 may be fitted and fixed on the step 36 to extend between the short fixed platten 34 and the rear wall 6 as shown in Figure 4. In the illustrated embodiment the removable platten 41 is substantially a mirror image of the part of the fixed platten 14 provided with the main top 15 at the right-hand wall 10. It has a top 43 which is situated at the same height as, and forms continuation of, the top 35 of the platten 34, extends from the short platten 34 to the rear wall 6, is supported by a receding support 42 provided with a laterally open cavity and is spaced from the rear wall.

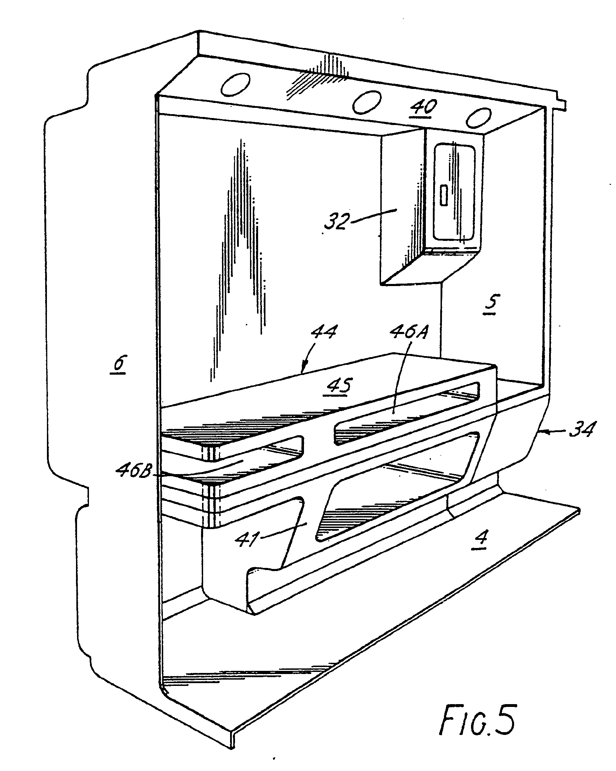

As shown in Fig. 5, the left-hand side may be provided with a worktop module 44, provided with a top 45 and laterally open cavities 46A and 46B. In the illustrated embodiment the worktop module 44 is a mirror image of the worktop module 24 shown in Figure 2. In this arrangement a "recess" is provided between the worktop module 44 and the front wall 5 below the cabinet 32.

All the removable parts mentioned, namely the worktop modules 24 and 44 and the removable platten 41, are fixed by means of quick-release attachment means (not-shown) known per se. As can be seen from the drawings the receding supports 18, 38 and 42 are provided at the floor 4 with a recess to accommodate the feet of persons working at the plattens and facing the associated side walls.

To the unit may be attached at its front part a so-called Luton front 51 (Figure 6) which may be made accessible through a first opening (not shown) in the front wall 5. A second opening (not shown) in the front wall 5, situated below the first opening, may serve for direct communication between the body unit and driver's cabin. The rear wall 6 is provided with a large opening providing access to the unit. The opening is closable e.g. by a double door (not shown). At the rear bottom corner parts of the body unit are situated two substantially L-shaped elements 52A and 52B connected to the unit e.g. by bolts and each comprising a direction indicator and stop and tail lamp unit.

Figure 6 shows diagrammatically a body unit according to the invention adapted as a dental suite. In this variant the left-hand side is without a removable platten (as shown in Figure 3) while the fixed platten 14 of the right-hand side carries a worktop module 54, so that the arrangement is similar to that shown in Figure 2. The worktop module 54 is substantially the module 24 (Figure 2) adapted for the needs of a dentist. In this embodiment the cavity in the raised top 16 accommodates a wash basin 55.

All water, air and electric services are contained within the dental worktop module 54 and connected by an umbilical cord to the rear wall 6 to allow external connection to main services outside the body unit. Central system is available for dental equipment, such as syringes, suction and air turbines.

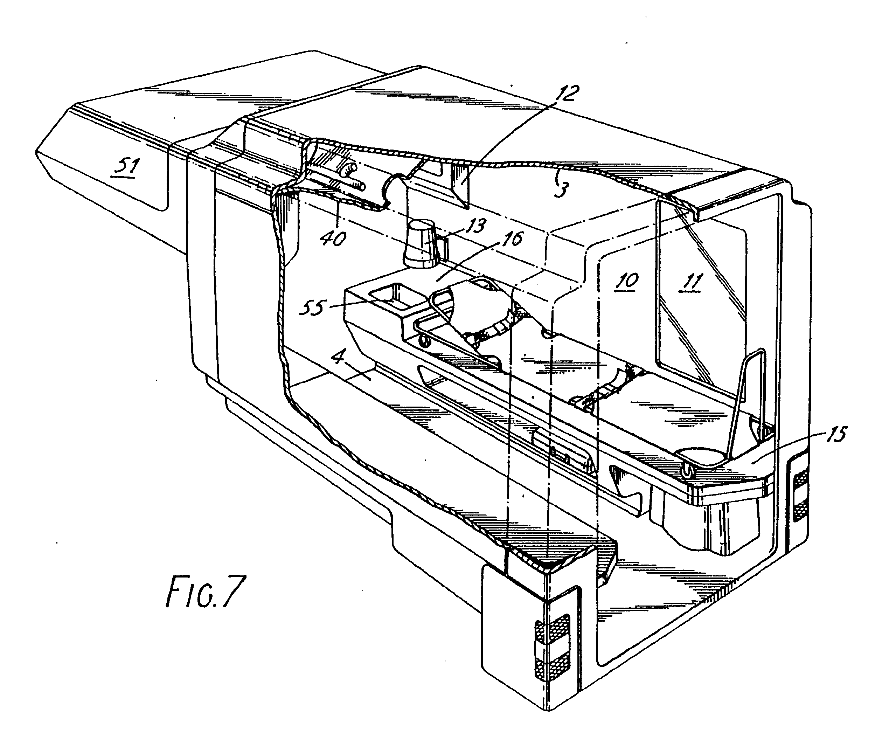

In the variant shown in Figure 7 the body unit is adapted to serve as an ambulance. In this variant the right-hand side is arranged as shown in Figure 1 and the left-hand side is shown as arranged in Figure 4 (but may be arranged as shown in Fig.3).

A stretcher rests on the platten 14 and is retained thereon by known mechanical means (not shown).

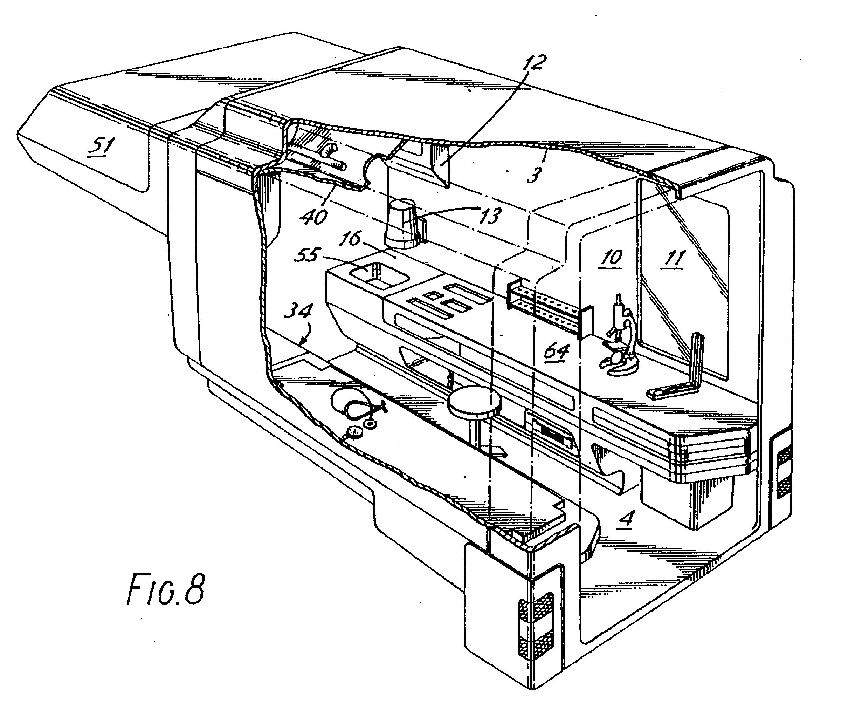

In the variant shown in Figure 8 the body unit is adapted as a clinic. In this variant the right-hand side is arranged as shown in Figure 2 and the left-hand side as shown in Figure 4 or 5.

The illustrated worktop module 64 may comprise a refrigeration equipment and electric sockets.

In the variant shown in Figure 9, the body unit is adapted to serve as an X-ray unit. For this purpose the right-hand side is arranged as shown in Figure 1 and the left-hand side as shown in Figure 3.

## Claims

1. A vehicle body unit in the form of an independent self-contained unit arranged for mounting to a vehicle and designed for easy convertability to a specific purpose, the unit comprising a first side, a second side, a top including a ceiling (3), a bottom including a floor (4), a front wall (5), and a rear wall (6) defining an access opening, characterised in that the first side comprising a first side wall (10) and an elongate platten (14) formed integrally with the front wall and the first side wall (5 and 10) extending therealong and providing a surface (15) parallel to, and spaced from, the floor (4); the width and length of said surface (15) being such that the surface can support a stretcher, the second side comprising a second side wall (30), a box-like structure extending therealong and a short fixed platten (34) and a first supporting step (36) extending between the short fixed platten (34) and the rear wall (6) and a second support step (37) extending along the first supporting step and formed by said box-like structure.

2. A unit according to Claim 1, wherein the elongate platten (14) is a long fixed platten extending between the front wall (5) and the rear wall (6).

3. A unit according to Claim 2, comprising a removable platten (41) sized, shaped and adapted to be positioned on, and fixed to, the first support step (36) to form continuation of the short fixed platten (34) while extending from the short fixed platten (34) to the rear wall (6), the removable platten (41) providing a second surface parallel to, and spaced from, the floor (4) and being similar to the first surface.

4. A unit according to Claim 2 or 3, wherein the first surface of the long fixed platten (14) is stepped and provides a main top (15) and a raised top (16), the platten (14) having a downwardly receding support (18).

5. A unit according to Claim 2 and any claim appended thereto, wherein the short fixed platten (34) has a planar top (35) and a downwardly receding support (38).

6. A unit according to Claim 2 and any claim appended thereto, comprising on at least on side a panel (20,40) oblique to the ceiling (3) and one of the side walls (10,30) and integral therewith.

7. A unit according to. Claim 2 and any claim appended thereto, wherein the first and/or second side wall includes a window (11).

8. A unit according to Claim 2 and any claim appended thereto, comprising a module (24) which is sized, shaped and adapted to be positioned on the main top (15) to form continuation of the raised top (16) and extend from the raised top to the rear wall (6).

9. A unit according to Claim 2 and any claim appended thereto, wherein the long fixed platten (14) is moulded integrally with the front wall and the first side wall and the short fixed platten (34) is moulded integrally with the front wall and the second side wall.

10. A unit according to any one of the preceding claims, wherein the first and/or second side wall carries a cabinet (12,32) moulded integrally therewith.

## Patentansprüche

1. Fahrzeug-Karosserie in Form einer unabhängigen, in sich geschlossenen Einheit zum Einbau in einem Fahrzeug sowie in einer derartigen Ausgestaltung, daß sie leicht für den jeweiligen Zweck überführbar ist, die Einheit mit einer ersten Seite, einer zweiten Seite, einem Oberteil mit einem Dach (3), einem Unterteil mit einem Boden (4), einer Vorderwand (5) sowie einer, eine Zugangsöffnung definierende Rückwand (6), **dadurch gekennzeichnet**, daß die erste Seite eine erste Seitenwand (10) sowie eine längliche Platte (14) aufweist, die einstückig mit der Vorderwand ausgebildet sind, wobei sich die erste Seitenwand (5 und 10) in Längsrichtung erstreckt und eine zu dem Boden (4) parallele und zu diesem beabstandete Fläche (15) aufweist, deren Breite und Länge derart ist, daß sie eine Verstrebung aufnehmen kann, daß die zweite Seite eine zweite Seitenwand (30) aufweist, entlang der sich eine kastenförmige Struktur erstreckt, und daß sich eine kurze, fixierte Platte (34) sowie eine erste Tragstufe (36) zwischen der kurzen, fixierten Platte (34) und der Rückwand (6) erstreckt und eine zweite Tragstufe (37) sich längs der ersten Tragstufe erstreckt und durch die kastenförmige Struktur gebildet ist.

2. Fahrzeug-Karosserie nach Anspruch 1, dadurch gekennzeichnet, daß die längliche Platte (14) eine lange, fixierte Platte ist, die sich zwischen der Vorderwand (5) und der Rückwand (6) erstreckt.

3. Fahrzeug-Karosserie nach Anspruch 2, gekennzeichnet durch eine entfernbare Platte (41) in einer Größe, Form und Ausgestaltung, daß sie auf der ersten Tragstufe (36) positionierbar und an dieser fixierbar ist und die Fortsetzung der kurzen, fixierten Platte (34) bildet, während sie sich von der kurzen, fixierten Platte (34) zur Rückwand (6) erstreckt, wobei die entfernbare Platte (42) eine zweite, zum Boden (4) parallele sowie von diesem beabstandete Fläche bildet, die ähnlich der ersten Fläche ist.

4. Fahrzeug-Karosserie nach Anspruch 2 oder 3, dadurch gekennzeichnet, daß die erste Fläche der langen, fixierten Platte (14) abgestuft ist und eine Hauptfläche (15) sowie eine erhöhte Fläche (16) aufweist, wobei die Platte (14) einen nach unten ragenden Träger (18) aufweist.

5. Fahrzeug-Karosserie nach einem der Ansprüche 2 bis 4, dadurch gekennzeichnet, daß die kurze, fixierte Platte (34) eine ebene Fläche (35) sowie einen nach unten ragenden Träger (38) aufweist.

6. Fahrzeug-Karosserie nach einem der Ansprüche 2 bis 5, gekennzeichnet durch eine an wenigstens einer Seite bezüglich des Daches (3) sowie zu einer der Seitenwände (10, 30) sowie mit dieser einstückig ausgebildete, schräg angeordnete Verkleidung (20, 40).

7. Fahrzeug-Karosserie nach einem der Ansprüche 2 bis 6, dadurch gekennzeichnet, daß die erste und/oder zweite Seitenwand ein Festet (11) aufweist.

8. Fahrzeug-Karosserie nach einem der Ansprüche 2 bis 7, gekennzeichnet durch ein Modul (24) in einer Größe, Form und Ausgestaltung, daß es auf der Fläche (15) zur Bildung einer Fortsetzung der erhöhten Fläche (16) anorbenbar ist und sich von der erhöhten Fläche zur Rückwand (6) erstreckt.

9. Fahrzeug-Karosserie nach einem der Ansprüche 2 bis 8, dadurch gekennzeichnet, daß die lange, fixierte Platte (14) einstückig mit der Vorderwand geformt ist, und daß die erste Seitenwand und die kurze, fixierte Platte (34) einstückig mit der Vorderwand und der zweiten Seitenwand geformt ist.

10. Fahrzeug-Karosserie nach einem der Ansprüche 1 bis 9, dadurch gekennzeichnet, daß die erste und/oder zweite Seitenwand ein einstückig damit geformtes Gehäuse (12, 32) aufweist.

## Revendications

1. Unité constituant une carrosserie pour un véhicule sous forme d'une unité indépendante, complète, agencée pour être montée sur un véhicule et conçue pour une convertibilité facile en vue d'un usage spécifique, cette unité comprenant un premier côté, un second côté, une paroi supérieure incluant un plafond (3), une paroi inférieure incluant un plancher (4), une paroi avant (5) et une paroi arrière (6) définissant une ouverture d'accès, caractérisée en ce que le premier côté comprend une première paroi latérale (10) et un plateau allongé (14) faisant partie intégrante de la paroi avant et de la paroi latérale (5 et 10), s'étendant longitudinalement et procurant une surface (15) parallèle au plancher (4) et espacée de celui-ci, la largeur et la longueur de cette surface (15) étant telles que la surface peut porter une civière, le second côté comprenant une seconde paroi latérale (30), une structure analogue à une boîte s'étendant le long de cette paroi et un plateau court fixe (34) et un premier gradin porteur (36) s'étendant entre le plateau court fixe (34) et la paroi arrière (6) et un second gradin porteur (37) s'étendant le long du premier gradin et constitué par la structure analogue à une boîte.

2. Unité selon la revendication 1, dans laquelle le plateau allongé (14) est un plateau long fixe s'étendant entre la paroi avant (5) et la paroi arrière (6).

3. Unité selon la revendication 2, comprenant un plateau amovible (41) dimensionné, profilé et adapté pour être disposé sur le premier degré porteur (36) et fixé à celui-ci pour constituer un prolongement du plateau court fixe (34) en s'étendant à partir de ce plateau court fixe (34) jusqu'à la paroi arrière (6), le plateau amovible (41) procurant une seconde surface parallèle au plancher (4) et espacée de celui-ci et étant similaire à la première surface.

4. Unité selon la revendication 2 ou 3, dans laquelle la première surface du plateau long fixe (14) est à degrés et présente une face supérieure principale (15) et une face surélevée (16), le plateau (14) ayant un élément porteur (18) se reculant vers le bas.

5. Unité selon la revendication 2 et selon toute revendication en dépendant, dans laquelle le plateau court fixe (34) a une face supérieure plane (35) et un élément (38) porteur se reculant vers le bas.

6. Unité selon la revendication 2 et selon toute revendication en dépendant, comprenant au moins sur un côté un panneau (20, 40) oblique par rapport au plafond (3) et une des parois latérales (10, 30) et faisant partie intégrante de ces deux dernières.

.7. Unité selon la revendication 2 et selon toute revendication en dépendant, dans laquelle la première et/ou la seconde paroi latérale comprend une fenêtre (11).

8. Unité selon la revendication 2 et selon toute revendication en dépendant, comprenant un module (24) qui est dimensionné, profilé et adapté pour être disposé sur la face supérieure principale (15) pour constituer un prolongement de la face surélevée (16) et qui s'étend de la face surélevée jusqu'à la paroi arrière (6).

9. Unité selon la revendication 2 et selon toute revendication en dépendant, dans laquelle le plateau long fixe (14) fait partie intégrante, par moulage, de la paroi avant et de la première paroi latérale et le plateau court fixe (34) fait partie intégrante, par moulage, de la paroi avant et de la seconde paroi latérale.

10. Unité selon l'une quelconque des revendications précédentes, dans laquelle la première et/ou la seconde paroi latérale porte un coffre (12, 32) qui en fait partie intégrante par moulage.

FIG.1

FIG.2

FIG.3

FIG.4

FIG.5

FIG. 6

FIG.7

EP 0 271 538 B1

FIG.8

EP 0 271 538 B1

FIG. 9